# EUROPÄISCHE PATENTSCHRIFT

(11) **EP 1 970 610 B1**
(45) Veröffentlichungstag und Bekanntmachung des Hinweises auf die Patenterteilung: **26.05.2010**
(21) Anmeldenummer: 07005225.3
(22) Anmeldetag: 14.03.2007
(51) Int. Cl.: F16K 31/06

(54) **Vorrichtung zur Regelung eines fluiden oder gasförmigen Mediums**
Device for regulating a fluid or gaseous medium
Dispositif destiné à la régulation d'un fluide liquide ou gazeux

(43) Veröffentlichungstag der Anmeldung: 17.09.2008
(73) Patentinhaber: Asco Joucomatic GmbH, 75248 Ölbronn-Dürrn (DE)
(72) Erfinder: Ams, Felix, 75236 Kämpfelbach (DE); Siedentopf, Klaus, 75245 Neulingen (DE); Vogt, Martin, 73252 Lenningen (DE)
(74) Vertreter: Kratzsch, Volkhard

(56) Entgegenhaltungen:
- EP-A- 1 536 169
- WO-A-2006/082703
- FR-A- 1 474 917
- GB-A- 2 039 000
- JP-A- 58 050 378
- JP-A- 58 068 569
- US-A- 2 826 215
- US-A- 3 606 241
- US-A- 3 902 527

## Beschreibung

Die Erfindung betrifft eine Vorrichtung zur Regelung eines fluiden oder gasförmigen Mediums, mit einer Ventileinrichtung mit einem Ventilgehäuse, das einen Ventileinlass und einen Ventilauslass aufweist, die über eine Ventilöffnung mit Ventilsitz miteinander in Verbindung stehen, mit einem mit dem Ventilsitz zur Durchflussregelung des Mediums durch die Ventilöffnung zusammenwirkenden, in Schließrichtung belasteten Ventilglied und mit einem elektromagnetischen Aktuator, der einen auf das Ventilglied arbeitenden Anker aufweist, der berührungslos axial beweglich geführt ist, wobei das Ventilgleid in Bezug auf dessen Beaufschlagung mit dem Mediumdruck am Ventileinlass und/oder am Ventilauslass druckausgeglichen ist, und wobei das Ventilglied mittels einer ersten Membran zentiert und axial berührungslos geführt ist, die zentral am Ventilglied angreift und randseitig am Ventilgehäuse gehalten ist und auf einer ersten Membranseite mit dem Mediumdruck am Ventileinlass beaufschlagt ist.

Eine Vorrichtung dieser Art ist bekannt aus JP 58068569 A. Bei dieser Vorrichtung befindet sich der Ventileinlass auf einer Seite und der Ventilauslass auf einer gegenüberliegenden anderen Seite des Ventilgliedes, wobei beide im geschlossenen Ventilzustand mittels des Ventilgliedes dazwischen gesperrt sind. Die Membran wird auf der dem Ventileinlass zugekehrten Seite mit dem Mediumdruck beaufschlagt. Die gegenüberliegende Membranseite kann von einer Druckkammer her über eine Kammeröffnung mit einem in Ventilöffnungsrichtung wirkenden Druck belastet sein. Hierzu wird in diese Druckkammer ein Referenzdruck eingespeist, um dementsprechend den Druck am Ventilauslass zu steuern.

Aus der FR-A-1 474 917 ist ein Ventil bekannt, das einen mittels eines elektromagnetischen Aktuators gegen die Wirkung einer Feder betätigbaren Ventilkörper in einer Ventilkammer aufweist. Der Ventilkörper steuert einen Durchlass von der einen Kammer in eine koaxial benachbarte zweite Kammer, an die ein Ventilauslass angeschlossen ist. Der Ventilkörper in der mit dem Ventileinlass verbundenen Kammer ist mit einem Balg verbunden, der das Kammerinnere gegenüber dem Balginneren abschließt. Das Balginnere steht über eine Öffnung mit der Umgebung in Verbindung. Auch in der anderen koaxialen Kammer ist ein Teil des Ventilgliedes mit einem Balg verbunden, der einen über eine nach außen führende Bohrung mit der Umgebung in Verbindung stehenden Balginnenraum absperrt. Auf diese Weise sind beide Kammerräume zur Umgebung hin abgedichtet und gegenüber der Umgebung druckausgeglichen.

Der Erfindung liegt die Aufgabe zugrunde, eine Vorrichtung zur Regelung eines fluiden oder gasförmigen Mediums der eingangs genannten Art so zu verbessern, dass bei geringem Aufwand nachteilige Folgen eventueller Druckschwankungen behoben sind und die Regelgenauigkeit der Ventileinrichtung erhöht ist.

Die Aufgabe ist erfindungsgemäß durch die Merkmale im Anspruch 1 gelöst. Dadurch, dass in axialem Abstand von der ersten Membran eine zweite radiale Membran im Ventilgehäuse gehalten ist, die mittels einen zentralen Verbindungselements des Ventilgliedes an letzerem befestigt ist, und dass das zentrale Verbindungselement einen Ausgleichskanal enthält, der mit einem Ende zu dem Ventilraum offen ist, der sich zwischen dem Aktuator und der zweiten Membran befindet, und der mit dem anderen Ende zur zweiten Membranseite der ersten Membran entlüftet ist, sind Druckschwankungen und unterschiedlich große Kräfte, die aufgrund der Druckverhältnisse auf beiden Seiten des Ventilgliedes wirken und den Ventilhub beeinflussen könnten, ausgeglichen. Dieser Druckausgleich führt zu größerer Genauigkeit bei der jeweiligen Betätigung des Ventilgliedes und damit zu insgesamt größerer Regelgenauigkeit, und dies bei geringem Aufwand. Dadurch, dass das Ventilglied berührungslos axial geführt und radial zentriert ist, ist eine Betätigung des Ventilgliedes praktisch reibungsfrei, da das Ventilglied keine Berührung mit dieses führenden Flächen hat. Dadurch lässt sich die Genauigkeit bei der Betätigung des Ventilgliedes noch weiter steigern, so dass die erreichbare Regelgenauigkeit noch weiter verbessert wird.

Weitere besondere Erfindungsmerkmale sowie Ausgestaltungen des Erfindungsgegenstandes ergeben sich aus den Unteransprüchen und der nachfolgenden Beschreibung.

Die Erfindung ist nachfolgend anhand von in den Zeichnungen gezeigten Beispielen näher erläutert. Es zeigen:
- Fig. 1: einen schematischen Längsschnitt einer Vorrichtung zur Regelung eines fluiden oder gasförmigen Mediums in Schließstellung, gemäß einem nicht erfindungsgemäßen Beispiel.
- Fig. 2: einen schematischen Schnitt entsprechend demjenigen in Fig. 1 einer Vorrichtung gleicher Art gemäß dem Ausführungsbeispiel,
- Fig. 3: eine schematische Draufsicht einer als Flachfeder ausgebildeten Feder, mit einem Teil des diese Feder aufnehmenden Gehäuses der Vorrichtung.

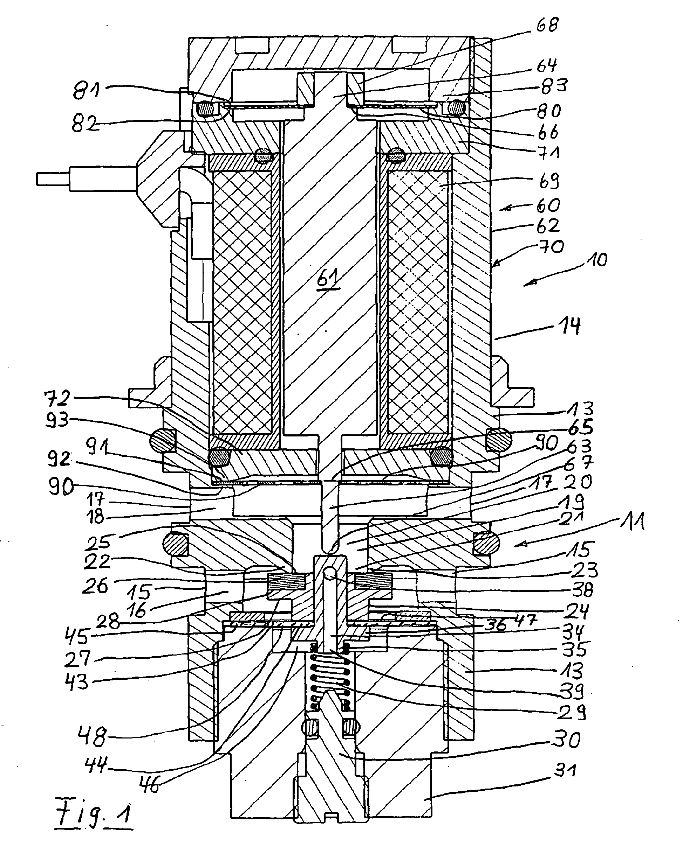

In Fig. 1 ist ein erstes Beispiel einer Vorrichtung 10 gezeigt, die zur Regelung eines fluiden oder gasförmigen Mediums ausgebildet ist. Die Vorrichtung 10 weist eine Ventileinrichtung 11 z. B. in Form eines 2/2-Wegeventils, auf, die ein Ventilgehäuse 13 hat. Bestandteil der Vorrichtung 10 ist ferner ein mit der Ventileinrichtung 11 zu einer Funktionseinheit verbundener elektromagnetischer Aktuator 60, der in üblicher Weise einen innerhalb einer Magnetspule 69 angeordneten und axial beweglichen Anker 61 aufweist. Der Anker 61 ist Teil des Magnetkreises 70 des Aktuators 60, zu dem ein eine Magnethülse bildendes Aktuatorgehäuse 62, eine Magnetplatte 71, die innerhalb des Aktuatorgehäuses 62 oberseitig der Magnetspule 69 angeordnet ist, sowie eine unterseitig der Magnetspule 69 angeordnete Ankerplatte 72 gehören. Das Ventilgehäuse 13 und das Aktuatorgehäuse 62 sind zu einem einstückigen Gehäuse 14 vereint.

Die Ventileinrichtung 11 weist einen Ventileinlass 15 und einen Ventilauslass 17 auf, die über eine innere Ventilöffnung 19 mit Ventilsitz 22 miteinander in Verbindung stehen. Ferner ist ein Ventilglied 24 vorgesehen, das zur Durchflussregelung des Mediums durch die Ventilöffnung 19 mit dem Ventilsitz 22 zusammenwirkt und federelastisch mit einstellbarer Schließkraft in Schließrichtung belastet ist. Die Schließrichtung ist beim Beispiel gemäß Fig. 1 nach oben und gegen den Ventilsitz 22 gerichtet. Gegensinnig dazu kann auf das Ventilglied 24 der Anker 61 des Aktuators 60 arbeiten, um das Ventilglied 24 von der Schließstellung in eine Öffnungsstellung zu bewegen. Bei Strombeaufschlagung drückt der Anker 61 des Aktuators 60 in Fig. 1 von oben her auf das Ventilglied 24, wobei mit zunehmender, darauf einwirkender Kraft die Durchlassöffnung zwischen dem Ventileinlass 15 und dem Ventilauslass 17 vergrößert wird.

Das Ventilglied 24 ist in Bezug auf dessen Beaufschlagung mit dem Mediumdruck am Ventileinlass 15 und/oder am Ventilauslass 17 druckausgeglichen. Das Ventilglied 24 enthält einen Druckausgleichskanal 34, der am in Fig. 1 oberen einen Ende 38 zum Ventilauslass 17 hin offen ist. Der Druckausgleichskanal 34 hat an diesem Ende 38 entsprechende Querbohrungen als Öffnungen.

Das Ventilglied 24 ist berührungslos axial geführt und radial zentriert, so dass eine besonders feinfühlige und genaue Betätigung des Ventilgliedes 24 möglich ist. Dies führt zu großer Regelgenauigkeit der Vorrichtung 10. Diese berührungslose Führung und Zentrierung des Ventilgliedes 24 wird beim ersten Ausführungsbeispiel durch mindestens eine radiale Membran 43 erreicht, die zentral am Ventilglied 24 angreift. Hierzu ist der innere Rand 44 der Membran 43 axial und radial fest mit dem Ventilglied 24 verbunden. Ferner ist der äußere Rand 45 der Membran 43 axial und radial fest am Ventilgehäuse 13 gehalten, z. B. dadurch, dass ein endseitiger Stopfen 31 mit Außengewinde in einen entsprechenden etwa topfartigen Teil des Ventilgehäuses 13, der mit Innengewinde versehen ist, von unten her eingeschraubt ist, wodurch die Membran 43 mit dem äußeren Rand 45 axial im Ventilgehäuse 13 festgespannt wird. Die radiale Zentrierung erfolgt dadurch, dass der Außendurchmesser der Membran 43 etwa dem Innendurchmesser eines Stufenabschnitts des Ventilgehäuses 13 entspricht. Auf diese Weise ist die Membran 43 sicher und auch dicht mit dem äußeren Rand 45 am Ventilgehäuse 13 gehalten. Die Membran 43 schließt das Innere 46 des Ventilgehäuses 13 gegenüber dem Ventileinlass 15 ab und ist auf einer ersten Membranseite 47 mit dem Mediumdruck am Ventileinlass 15 und auf der gegenüberliegenden, in Fig. 1 nach unten weisenden zweiten Membranseite 48 dadurch mit dem Mediumdruck am Ventilauslass 17 beaufschlagt, dass die Beaufschlagung der zweiten Membranseite 48 mit dem Mediumdruck am Ventilauslass 17 mittels des Druckausgleichskanals 34 erfolgt, der mit seinem in Fig. 1 unteren Ende 39 zur zweiten Membranseite 48 hin offen ist. Dadurch herrschen auf beiden Seiten 47 und 48 der Membran 43 und damit des Ventilgliedes 24 beim Öffnen und bei der Verstellung des Ventilgliedes 24 gleiche Druckverhältnisse. Das Ventilglied 24 ist hinsichtlich der Drücke ausgeglichen. Dadurch ist eine besonders leichtgängige und sehr feine Verstellung des Ventilgliedes 24 und damit große Regelgenauigkeit möglich. Etwaige Druckschwankungen sind ohne Einfluß auf den Ventilhub.

Die Membran 43 ist mit ihrem inneren Rand 44 mittels eines Klemmelements 36 des Ventilgliedes 24 an diesem festgeklemmt. Die Membran 43 greift auf der Seite 27 des Ventilgliedes 24 an diesem an, die dem Ventilsitz 22 abgewandt ist, somit auf der in Fig. 1 unteren Seite des Ventilgliedes 24.

Die Ventilöffnung 19 ist als zentraler Durchlass 20 im Ventilgehäuse 13 gebildet, der auf einer Axialseite 21, die dem Aktuator 60 abgewandt ist, in einen koaxialen Ringsitz 23 ausmündet, der den Ventilsitz 22 bildet. Dieser Ringsitz 23 ist etwa schneidenförmig gestaltet, so dass sich bei in Schließstellung befindlichem Ventilglied 24 nahezu eine Linienberührung oder eine nur sehr schmalflächige Flächenberührung ergibt.

Der Ventileinlass 15 ist auf der Seite 21 des zentralen Durchlasses 20 angeordnet, die den Ventilsitz 22 enthält. Der Ventilauslass 17 ist in axialem Abstand auf der anderen Seite des zentralen Durchlasses 20 angeordnet. Der Ventileinlass 15 und der Ventilauslass 17 weisen jeweils mindestens einen radialen Kanal 16, 18 auf, z. B. eine Bohrung, die radial innen in die Ventilöffnung 19 mündet und durch das Ventilgehäuse 13 hindurch radial nach außen führt.

Der Anker 61 des Aktuators 60 ist mittels mindestens einer radial verlaufenden Feder 80, 90 in Form insbesondere einer Flachfeder berührungslos axial beweglich geführt. Dadurch sind etwaige Reibungen bei der Axialbewegung des Ankers 61 ausgeschlossen. Der Anker ist dadurch feinverstellbar, wodurch die Regelgenauigkeit der Vorrichtung 10 gesteigert ist. Der Anker 61 ist an beiden Enden mit einem koaxialen Vorsprung 63, 64 versehen, mit dem der Anker 61 an der mindestens einen Feder 80, 90 in Form einer Flachfeder zentriert gehalten ist. Die mindestens eine Feder 80, 90, insbesondere Flachfeder, kann mit einem äußeren Randbereich 81 bzw. 91 zwischen zwei Gehäuseelementen 82, 83 bzw. 92, 93 des Aktuators 60 bzw. des Ventilgehäuses 13 axial gehalten und radial zentriert sein. Das eine Gehäuseelement 83 kann der in das Aktuatorgehäuse 62 eingeschraubte Gehäusedeckel sein. Das andere Gehäuseelement 82 ist durch die Magnetplatte 71 gebildet, die einen entsprechend eingetieften Ringsitz zur Aufnahme der Feder 80 im Bereich des äußeren Randes bildet. Der Vorsprung 64 des Ankers 61 weist einen abgestuften Ringabsatz 66 auf, auf dem die obere Feder 80 mit ihrem inneren Rand axial aufsitzt, wobei mittels des Vorsprunges 64 eine radiale Zentrierung erfolgen kann.

Bei der in Fig. 1 unteren Feder 90 erfolgt deren Aufnahme im Bereich des äußeren Randes 91 innerhalb des Ventilgehäuses 13. Unterhalb des Randbereiches 91 ist als Gehäuseelement 92 ein dort ausgebildeter Ringboden oberhalb des Ventilauslasses 17 vorhanden, auf dem die Feder 90 mit ihrem äußeren Randbereich 91 aufliegt. Von oben her wird dieser Randbereich 91 vom Rand der Ankerplatte 27 beaufschlagt, die als Gehäuseelement 93 zur Halterung der Feder 90 wirksam ist.

Die Vorrichtung 10 ist somit derart gestaltet, dass der Anker 61 zwei Federn 80, 90, insbesondere Flachfedern, aufweist, und zwar eine obere Feder 80 an einem Ende, das der Ventileinrichtung 11 abgewandt ist, und eine untere Feder 90 am anderen Ende, das der Ventileinrichtung 11 zugewandt ist, wobei die Federn 80, 90 jeweils auf dem zentralen axialen Vorsprung 64 bzw. 63 des Ankers 21 gehalten sind. Die obere Feder 80 ist auf diesem Vorsprung 64 nach Justierung axial mittels einer Mutter 68 festgespannt. Jeder axiale Vorsprung 63, 64 weist einen Ringabsatz 65, 66 auf, an dem die Feder 80, 90 axial abgestützt ist. Die untere Feder 90 ist dabei nur in einer Axialrichtung, die der Ventilöffnungsbetätigung des Ankers 21 entspricht und in Fig. 1 nach unten gerichtet ist, axial abgestützt. Die obere Feder 80 ist in beschriebener Weise mittels des Ringabsatzes 66 sowie der Mutter 68 in beiden Axialrichtungen fixiert.

Der zentrale axiale Vorsprung 63 des Ankers 61, der sich gemäß Fig. 1 am unteren Ende des Ankers 61 erstreckt, stößt mit seinem freien Ende 67, das sich in die Ventilöffnung 19 hineinerstreckt, axial von oben her am Ventilglied 24 an und ist in der Lage, bei Aktivierung des Akuators 60 das Ventilglied 24 in Fig. 1 nach unten in eine Öffnungsstellung zu verschieben. Mit zunehmender Betätigungskraft wird die Durchlassöffnung zwischen dem Ventileinlass 15 und dem Ventilauslass 17 vergrößert.

Das Ventilglied 24 ist mittels einer vorzugsweise koaxialen Schließfeder 29 in Form z. B. einer zylindrischen Schraubenfeder mit einstellbarer Schließkraft derart in Schließstellung gehalten, dass eine radiale oberseitige Dichtfläche 25 des Ventilgliedes 24 axial gegen den Ventilsitz 22 angepresst ist und in der Schließstellung eine vollständige Dichtheit gewährleistet ist. Die radiale Dichtfläche 25 ist z. B. durch ein scheibenförmiges Dichtungselement 26, z. B. aus einem Elastomer, gebildet. Das Dichtungselement 26 ist mit dem übrigen Teil des Ventilgliedes 24 fest verbunden, z. B. verklebt od. dgl. Die das Ventilglied 24 in Schließrichtung beaufschlagende Schließfeder 29 ist axial an einem Stellelement 30 in Form z. B. einer Justierschraube abgestützt, die im Ventilgehäuse 13, insbesondere deren Stopfen 31, drehverstellbar gehalten ist. Die Schließfeder 29 und das Stellelement 30 sind koaxial und auf derjenigen Seite 27 des Ventilgliedes 24 angeordnet, die dem Ventilsitz 22 abgewandt ist.

Das Ventilglied 24 weist einen Ventilteller 28 auf. Dieser ist von einem axialen zentralen Verbindungselement 35 durchsetzt, das etwa rohrförmig ist. Das Verbindungselement 35 steht über den Ventilteller 28 in Richtung zur Ventilöffnung 19 über und reicht bis zu Ende 67 des axialen Vorsprunges 63 des Ankers 61, so dass dieses Ende 67 in Fig. 1 von oben her auf dem Verbindungselement 35 axial aufsitzen kann. Das Verbindungselement 35 weist an dem den axialen Vorsprung 63 und Ende 67 dieses abgewandten Ende unterhalb der Membran 43 das dortige Klemmelement 36 z. B. in Form eines Klemmringes auf. Das Klemmelement 36 kann einstückiger Bestandteil des Verbindungselements 35 sein. Das Verbindungselement 35 enthält im Inneren den Druckausgleichskanal 34, der sich axial durchgehend erstreckt und mit seinem in Fig. 1 unteren Ende 39 in Richtung zur Schließfeder 29 hin axial offen ist.

Bei Aktivierung des Aktuators 60 wird dessen Anker 61 in Fig. 1 nach unten axial verschoben. Dieser wirkt mit dem Ende 67 des axialen Vorsprunges 63 auf das Verbindungselement 35 derart ein, dass dieses in Fig. 1 nach unten verschoben wird zusammen mit dem daran befestigten Ventilglied 24. Bei dieser Bewegung in Öffnungsstellung wird das Ventilglied 24 mittels der Membran 43 berührungslos axial geführt und radial zentriert. Durch Abheben vom Ventilsitz 22 wird eine Verbindung zwischen dem Ventileinlass 15 durch die Ventilöffnung 19 hindurch zum Ventilauslass 10 geschaffen, so dass ein Mediumdurchfluss möglich ist. Bei Strombeaufschlagung des Aktuators 60 kann der Anker 61 mit zunehmender Kraft die Öffnung zwischen dem Ventileinlass 15 und dem Ventilauslass 17 vergrößern. Das Ventilglied 24 ist in Bezug auf dessen Beaufschlagung mit dem Mediumdruck am Ventileinlass 15 und am Ventilauslass 17 druckausgeglichen. Der im Bereich des Ventilauslasses 17 herrschende und von dort das Ventilglied 24 beaufschlagende Mediumdruck wird über den Druckausgleichskanal 34 mit den Öffnungen an den Enden 38 und 39 zum Inneren 46 und zur dortigen zweiten Membranseite 48 der Membran 43 geführt, wodurch ein Druckausgleich zwischen Ventileinlass 15 und Ventilauslass 17 erfolgt. Das Ventilglied 24 ist dadurch äußerst leichtgängig und im Übrigen nahezu reibungsfrei verstellbar. Es sind relativ geringe Stellkräfte erforderlich. Es ergibt sich eine große Regelgenauigkeit. Evtl. Druckschwankungen zwischen Ventileinlass 15 und Ventilauslass 17 bleiben ohne Auswirkungen auf den Ventilhub.

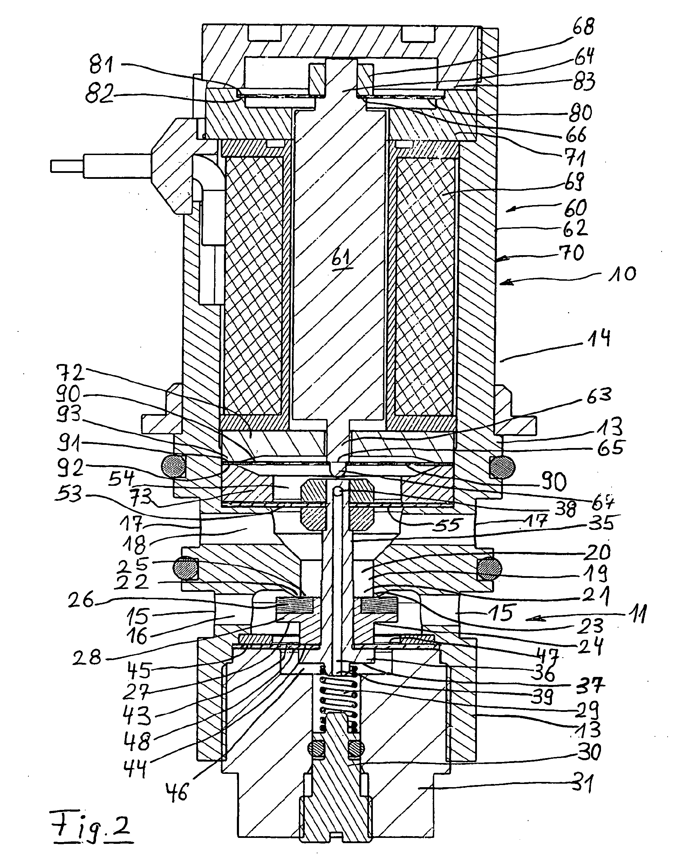

Bei dem in Fig. 2 gezeigten Ausführungsbeispiel sind für die Elemente, die dem ersten Beispiel entsprechen, gleiche Bezugszeichen verwendet, so dass dadurch zur Vermeidung unnötiger Wiederholungen auf die Beschreibung des ersten Beispieles Bezug genommen ist.

Die Vorrichtung 10 gemäß Fig. 2 unterscheidet sich von derjenigen in Fig. 1 dadurch, dass in axialem Abstand von der ersten Membran 43 eine zweite radiale Membran 53 oberhalb des Ventilgliedes 24 vorgesehen und im Ventilgehäuse 13 gehalten ist, die mittels des zentralen Verbindungselements 35 am Ventilglied 24 befestigt ist. Die zweite Membran 53 schließt das Innere 54 des Ventilgehäuses 13 gegenüber dem Ventilauslass 17 ab. Sie ist mit ihrem äußeren Rand analog der ersten Membran 43 radial und axial fixiert, und zwar mittels einer Zusatzplatte 73, die axial von oben auf den Rand drückt.

Die Anordnung ist bei dieser Vorrichtung 10 derart getroffen, dass die erste Membran 43 auf ihrer dem Ventileinlass 15 zugewandten ersten Membranseite 47 mit dem dortigen Mediumdruck in einer ersten Axialrichtung, nämlich in Fig. 2 nach unten, beaufschlagt wird und die zweite Membran 53 auf ihrer dem Ventilauslass 17 zugewandten Seite 55 mit dem dortigen Mediumdruck in einer zweiten Axialrichtung beaufschlagt wird, nämlich in Fig. 2 nach oben, die der ersten Axialrichtung entgegengesetzt ist. Auf diese Weise erfolgt ein Druckausgleich am Ventilglied 24.

Das zentrale Verbindungselement 35 ist bei dem Ausführungsbeispiel länger ausgebildet. Es enthält einen Ausgleichskanal 37 analog dem Druckausgleichskanal 34 in Fig. 1, wobei der Ausgleichskanal 37 mit dem in Fig. 2 oberen Ende 38 zu demjenigen Ventilraum 54 offen ist, der sich zwischen dem Aktuator 60 und der zweiten Membran 53 befindet. Das andere Ende 39 des Ausgleichskanals 37 ist zur zweiten Membranseite 48 der ersten Membran 43 entlüftet.

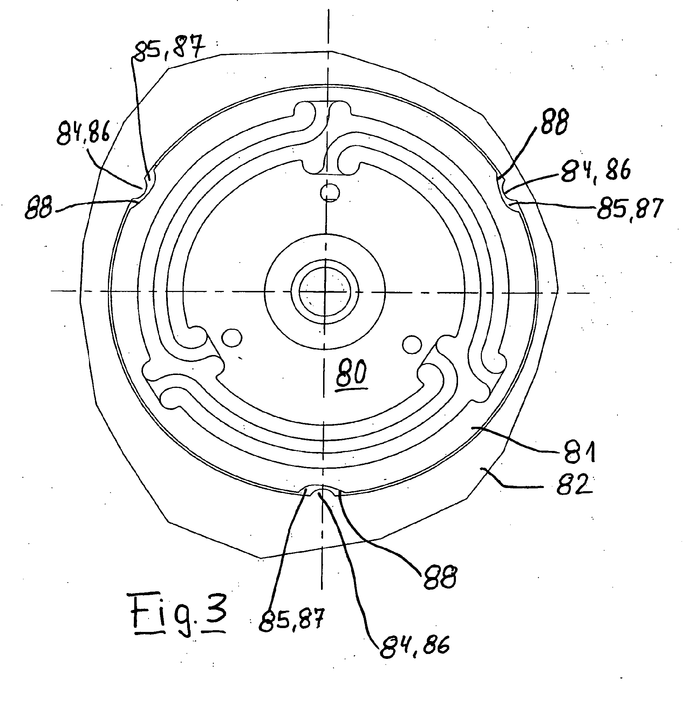

In Fig. 3 ist eine schematische Draufsicht einer als Flachfeder ausgebildeten Feder 80 dargestellt, die gegenüber derjenigen in Fig. 1 und 2 modifiziert ist, wobei die Merkmale dieser Feder 80 gemäß Fig. 3 für beide Beispiele in Fig. 1 und 2 zum Einsatz kommen können.

Zur radialen Zentrierung der Feder 80 gemäß Fig. 3, insbesondere in Form der dortigen Flachfeder, sind radial gerichtete Vorsprünge 84 einerseits und zugeordnete, radial offene Ausnehmungen 85 andererseits vorgesehen. Die Vorsprünge 84 sind als etwa halbkreisförmige Nasen 86 ausgebildet. Die radialen Ausnehmungen 85 sind als den Vorsprüngen 84, insbesondere Nasen 86, zugeordnete Einbuchtungen 87 gestaltet. In diese können die Vorsprünge 84, insbesondere Nasen 86, radial eingreifen. Die Ausnehmungen 85 laufen in zumindest einer Umfangsrichtung in jeweilige Schrägkanten 88 aus, die dadurch zum Zentrieren der Feder 80, insbesondere Flachfeder, dienen können, dass die Feder 80 im Gegenuhrzeigersinn gemäß Fig. 3 gedreht wird. Hierbei laufen die Vorsprünge 84 und die Schrägkanten 88 aufeinander auf, wobei aufgrund der Schräge eine radial nach innen gerichtete Stellbewegung der Feder 80 erzeugt wird. Die Vorsprünge 84 und die Ausnehmungen 85 sind jeweils in etwa gleich großen Umfangswinkelabständen von einander angeordnet. Z. B. sind drei Vorsprünge 84 vorgesehen, die z. B. an einem Gehäuseelement 82 der Vorrichtung ausgebildet sind. Ferner sind drei zugeordnete Ausnehmungen 85 vorgesehen, die z. B. am Außenrand der Feder 80 ausgebildet sind. Diese sind jeweils in Umfangswinkelabständen von 120° platziert.

Die beschriebene Vorrichtung 10 gemäß den gezeigten Beispielen hat aufgrund des Druckausgleichs am Ventilglied 24 vielfältige, vorstehend dargelegte Vorteile. Hierzu gehört auch der Vorteil, dass etwaige Druckschwankungen auf der Einlassseite und/oder auf der Auslassseite beim Ventileinlass 15 bzw. Ventilauslass 17 keinen Einfluss auf den Ventilhub und damit auf den Durchfluss des Mediums haben. Die anhand von Fig. 3 vorstehend erläuterten Einzelheiten ermöglichen eine besonders einfache und sehr genaue Justierung des Ankers 61. Zu diesem Zweck wird die Feder 80 in das Gehäuseelement 82 eingelegt, wobei diese im Zentrum vorm Vorsprung 64 durchsetzt ist. Hiernach wird die Mutter 68 angezogen, so dass im Zentrum eine feste Verbindung zwischen der Feder 80 und dem Anker 61 hergestellt ist. Danach kann die Feder 80 zusammen mit dem Anker 61 zu Justierzwecken dieses in Fig. 3 im Gegenuhrzeigersinn relativ zu Gehäuseelement 82 gedreht werden, wobei aufgrund der zusammenwirkendenden Vorsprünge 84 und Ausnehmungen 85 eine Zentrierung der Feder 80 und des Ankers 61 geschieht.

## Patentansprüche

1. Vorrichtung zur Regelung eines fluiden oder gasförmigen Mediums, mit einer Ventileinrichtung (11) mit einem Ventilgehäuse (13), das einen Ventileinlass (15) und einen Ventilauslass (17) aufweist, die über eine Ventilöffnung (19) mit Ventilsitz (22) miteinander in Verbindung stehen, mit einem mit dem Ventilsitz (22) zur Durchflussregelung des Mediums durch die Ventilöffnung (19) zusammenwirkenden, in Schließrichtung belasteten Ventilglied (24) und mit einem elektromagnetischen Aktuator (60), der einen auf das Ventilglied (24) arbeitenden Anker (61) aufweist, der berührungslos axial beweglich geführt ist, wobei das Ventilglied (24) in Bezug auf dessen Beaufschlagung mit dem Mediumdruck am Ventileinlass (15) und/oder am Ventilauslass (17) druckausgeglichen ist, und wobei das Ventilglied (24) mittels einer ersten radialen Membran (43) zentriert und axial berührungslos geführt ist, die zentral am Ventilglied (24) angreift und randseitig am Ventilgehäuse (13) gehalten ist,
und auf einer ersten Membranseite (47) mit dem Mediumdruck am Ventileinlass (15) beaufschlagt ist,
**dadurch gekennzeichnet,**
**dass** in axialem Abstand von der ersten Membran (43) eine zweite radiale Membran (53) im Ventilgehäuse (13) gehalten ist, die mittels eines zentralen Verbindungselements (35) des Ventilgliedes (24) an letzterem befestigt ist,
und **dass** das zentrale Verbindungselement (35) einen Ausgleichskanal (37) enthält, der mit einem Ende (38) zu dem Ventilraum (54) offen ist, der sich zwischen dem Aktuator (60) und der zweiten Membran (53) befindet, und der mit dem anderen Ende (39) zur zweiten Membranseite (48) der ersten Membran (43) entlüftet ist.

2. Vorrichtung nach Anspruch 1,
**dadurch gekennzeichnet,**
**dass** die erste Membran (43) das Innere (46) des Ventilgehäuses (13) gegenüber dem Ventileinlass (15) abschließt.

3. Vorrichtung nach Anspruch 1 oder 2,
**dadurch gekennzeichnet,**
**dass** die erste Membran (43) auf der Seite (27) des Ventilgliedes (24) an diesem angreift, die dem Ventilsitz (22) abgewandt ist, und auf dieser Seite (27) mittels eines Klemmelements (36) des Ventilgliedes (24) an diesem festgeklemmt ist.

4. Vorrichtung nach einem der Ansprüche 1 bis 3,
**dadurch gekennzeichnet,**
**dass** die Ventilöffnung (19) als zentraler Durchlass (20) im Ventilgehäuse (13) gebildet ist, der auf einer Axialseite(21), die dem Aktuator (60) abgewandt ist, in einen koaxialen Ringsitz (23) ausmündet, der den Ventilsitz (22) bildet.

5. Vorrichtung nach Anspruch 4,
**dadurch gekennzeichnet,**
**dass** der Ventileinlass (15) auf der Seite (21) des zentralen Durchlasses (20), die den Ventilsitz (22) enthält, und der Ventilauslass (17) in axialem Abstand auf der anderen Seite des zentralen Durchlasses (20) angeordnet ist.

6. Vorrichtung nach einem der Ansprüche 1 bis 5,
**dadurch gekennzeichnet,**
**dass** der Ventileinlass (15) und der Ventilauslass (17) jeweils mindestens einen radialen Kanal (16, 18), z. B. eine Bohrung, aufweist, der radial innen in die Ventilöffnung (19) mündet.

7. Vorrichtung nach Anspruch 1,
**dadurch gekennzeichnet,**
**dass** die zweite Membran (53) das Innere (54) des Ventilgehäuses (13) gegenüber dem Ventilauslass (17) abschließt.

8. Vorrichtung nach Anspruch 1,
**dadurch gekennzeichnet,**
**dass** die erste Membran (43) auf ihrer dem Ventileinlass (15) zugewandten ersten Membranseite (47) mit dem dortigen Mediumdruck in einer ersten Axialrichtung beaufschlagt wird und die zweite Membran (53) auf ihrer dem Ventilauslass (17) zugewandten Seite (55) mit dem dortigen Mediumdruck in einer zweiten Axialrichtung, die der ersten Axialrichtung entgegengesetzt ist, beaufschlagt wird und dass **dadurch** das Ventilglied (24) druckausgeglichen ist.

9. Vorrichtung nach einem der Ansprüche 1 bis 8
**dadurch gekennzeichnet,**
**dass** der Anker (61) mittels mindestens einer radial verlaufenden Feder (80, 90), insbesondere Flachfeder, berührungslos axial beweglich geführt ist.

10. Vorrichtung nach Anspruch 9,
**dadurch gekennzeichnet,**
**dass** der Anker (61) mit einem koaxialen Vorsprung (63, 64) an der mindestens einen Feder (80, 90), insbesondere Flachfeder, zentriert gehalten ist.

11. Vorrichtung nach Anspruch 9 oder 10,
**dadurch gekennzeichnet,**
**dass** die mindestens eine Feder (80, 90), insbesondere Flachfeder, mit einem äußeren Randbereich (81, 91) zwischen zwei Gehäuseelementen (82, 83 bzw. 92, 93), z. B. des Aktuators (60) oder des Ventilgehäuses (13), axial gehalten und radial zentriert ist.

12. Vorrichtung nach einem der Ansprüche 9 bis 11,
**dadurch gekennzeichnet,**
**dass** zur radialen Zentrierung der mindestens einen Feder (80), insbesondere Flachfeder, radial gerichtete Vorsprünge (84) einerseits und zugeordnete, radial offene Ausnehmungen (85) andererseits vorgesehen sind.

13. Vorrichtung nach Anspruch 12,
**dadurch gekennzeichnet,**
**dass** die Vorsprünge (84) als etwa halbkreisförmige Nasen (86) ausgebildet sind.

14. Vorrichtung nach Anspruch 12 oder 13,
**dadurch gekennzeichnet,**
**dass** die radialen Ausnehmungen (85) als den Vorsprüngen (84), insbesondere Nasen (86), zugeordnete Einbuchtungen (87) ausgebildet sind, in die die Vorsprünge (84), insbesondere Nasen (86), eingreifen können, und dass die Ausnehmungen (85) in zumindest einer Umfangsrichtung in Schrägkanten (88) auslaufen, die **dadurch** zum Zentrieren der mindestens einen Feder (80), insbesondere Flachfeder, durch Drehen dieser dienen, dass dabei die Vorsprünge (84) und die Schrägkanten (88) relativ zueinander auflaufen und aufgrund der Schräge eine radial nach innen gerichtete Stellbewegung der mindestens einen Feder (80), insbesondere Flachfeder, erzeugen.

15. Vorrichtung nach einem der Ansprüche 12 bis 14,
**dadurch gekennzeichnet,**
**dass** die Vorsprünge (84) und die Ausnehmungen (85) jeweils in etwa gleich großen Umfangswinkelabständen voneinander angeordnet sind.

16. Vorrichtung nach einem der Ansprüche 12 bis 15,
**dadurch gekennzeichnet,**
**dass** drei Vorsprünge (84), z. B. an einem Gehäuseelement (82), und drei zugeordnete Ausnehmungen (85), z. B. an der Feder (80), in Umfangswinkelabständen von etwa 120° vorgesehen sind.

17. Vorrichtung nach einem der Ansprüche 9 bis 16,
**dadurch gekennzeichnet,**
**dass** der Anker (61) an einem Ende, das der Ventileinrichtung (11) abgewandt ist, eine Feder (80), insbesondere Flachfeder, aufweist, die auf einem ersten zentralen axialen Vorsprung (64) des Ankers (61) gehalten und axial festgespannt ist.

18. Vorrichtung nach einem der Ansprüche 9 bis 17,
**dadurch gekennzeichnet,**
**dass** der Anker (61) an dem anderen Ende, das der Ventileinrichtung (11) zugewandt ist, eine weitere Feder (90), insbesondere Flachfeder, aufweist, die auf einem zweiten zentralen axialen Vorsprung (63) des Ankers (61) gehalten ist.

19. Vorrichtung nach Anspruch 17 oder 18,
**dadurch gekennzeichnet,**
**dass** der erste und/oder zweite axiale Vorsprung (63, 64) einen Ringabsatz (65, 66) aufweist, an dem die Feder (80, 90), insbesondere Flachfeder, axial abgestützt ist, vorzugsweise nur in einer Axialrichtung, die der Ventilöffnungsbetätigung des Ankers (61) entspricht.

20. Vorrichtung nach Anspruch 18,
**dadurch gekennzeichnet,**
**dass** der zweite zentrale axiale Vorsprung (63) des Ankers (61) mit seinem freien Ende (67) axial am Ventilglied (24) anstößt und bei Aktivierung des Aktuators (60) das Ventilglied (24) in Öffnungsstellung verschiebt und mit zunehmender Betätigungskraft die Ventilöffnung (19) zwischen dem Ventileinlass (15) und dem Ventilauslass (17) vergrößert.

21. Vorrichtung nach einem der Ansprüche 1 bis 20,
**dadurch gekennzeichnet,**
**dass** das Ventilglied (24) mittels einer vorzugsweise koaxialen Schließfeder (29) mit einstellbarer Schließkraft derart in Schließstellung gehalten ist, dass eine radiale Dichtfläche (25) des Ventilgliedes (24) axial gegen den Ventilsitz (22) angepresst wird.

22. Vorrichtung nach Anspruch 21,
**dadurch gekennzeichnet,**
**dass** die radiale Dichtfläche (25) ein z. B. scheibenförmiges Dichtungselement (26), z. B. aus einem Elastomer, aufweist.

23. Vorrichtung nach Anspruch 21 oder 22,
**dadurch gekennzeichnet,**
**dass** die das Ventilglied (24) in Schließrichtung beaufschlagende Schließfeder (29) an einem Stellelement (30), z. B. einer Justierschraube, axial abgestützt ist, das im Ventilgehäuse (13) verstellbar gehalten ist.

24. Vorrichtung nach einem der Ansprüche 21 bis 23,
**dadurch gekennzeichnet,**
**dass** die Schließfeder (29) als zylindrische Schraubenfeder ausgebildet ist.

25. Vorrichtung nach einem der Ansprüche 21 bis 24,
**dadurch gekennzeichnet,**
**dass** die Schließfeder (29) und das Stellelement (30) koaxial und auf der Seite (27) des Ventilgliedes (24) angeordnet sind, die dem Ventilsitz (22) abgewandt ist.

26. Vorrichtung nach einem der Ansprüche 17 bis 25,
**dadurch gekennzeichnet,**
**dass** das Ventilglied (24) einen Ventilteller (28) aufweist, der von dem axialen, über den Ventilteller (28) überstehenden und bis zum axialen Vorsprung (63, 67) des Ankers (61) reichenden zentralen Verbindungselement (35) durchsetzt ist.

27. Vorrichtung nach Anspruch 26,
**dadurch gekennzeichnet,**
**dass** das Verbindungselement (35) etwa rohrförmig ist.

28. Vorrichtung nach Anspruch 26 oder 27,
**dadurch gekennzeichnet,**
**dass** das Verbindungselement (35) an dem dem axialen Vorsprung (63, 67) abgewandten Ende das Klemmelement (36), z. B. in Form eines Klemmringes, aufweist, insbesondere damit einstückig ist.

29. Vorrichtung nach einem der Ansprüche 26 bis 28,
**dadurch gekennzeichnet,**
**dass** der Ausgleichskanal (37) des Verbindungselements (35) mit einem Ende (39) in Richtung zur Schließfeder (29) axial offen ist.

30. Vorrichtung nach einem der Ansprüche 1 bis 29,
**dadurch gekennzeichnet,**
**dass** das Aktuatorgehäuse (62) und das Ventilgehäuse (13) zu einem einstückigen Gehäuse (14) vereint sind.

## Claims

1. Apparatus for regulating a fluid or gaseous medium, with a valve device (11) having a valve housing (13) which has a valve inlet (15) and a valve outlet (17) which are connected to one another via a valve orifice (19) having a valve seat (22), with a valve member (24) cooperating with the valve seat (22) for regulating the through flow of the medium through the valve orifice (19) and loaded in the closing direction, and with an electromagnetic actuator (60) which has an armature (61) which acts upon the valve member (24) and which is guided axially movably in a contactless manner, the valve member (24) being pressure-compensated with respect to the action of the medium pressure upon it at the valve inlet (15) and/or at the valve outlet (17), and the valve member (24) being centred and guided axially in a contactless manner by means of a first radial diaphragm (43) which engages centrally on the valve member (24) and which is held marginally on the valve housing (13) and which is acted upon on a first diaphragm side (47) by the medium pressure at the valve inlet (15), **characterized in that** a second radial diaphragm (53) is held at an axial distance from the first diaphragm (43) in the valve housing (13) and is fastened to the valve member (24) by means of a central connecting element (35) of the latter, and **in that** the central connecting element (35) contains a compensating duct (37) which is open at one end (38) to the valve space (54) located between the actuator (60) and the second diaphragm (53) and which is vented at the other end (39) to the second diaphragm side (48) of the first diaphragm (43).

2. Apparatus according to Claim 1, **characterized in that** the first diaphragm (43) closes off the interior (46) of the valve housing (13) with respect to the valve inlet (15).

3. Apparatus according to Claim 1 or 2, **characterized in that** the first diaphragm (43) engages on the valve member (24) on that side (27) of the latter which faces away from the valve seat (22) and is firmly clamped on this side (27) to the valve member (24) by means of a clamping element (36) of the latter.

4. Apparatus according to one of Claims 1 to 3, **characterized in that** the valve orifice (19) is formed as a central passage (20) in the valve housing (13), which passage issues, on an axial side (21) facing away from the actuator (60), into a coaxial annular seat (23) which forms the valve seat (22).

5. Apparatus according to Claim 4, **characterized in that** the valve inlet (15) is arranged on that side (21) of the central passage (20) which contains the valve seat (22), and the valve outlet (17) is arranged at an axial distance on the other side of the central passage (20).

6. Apparatus according to one of Claims 1 to 5, **characterized in that** the valve inlet (15) and the valve outlet (17) have in each case at least one radial duct (16, 18), for example a bore, which issues into the valve orifice (19) radially on the inside.

7. Apparatus according to Claim 1, **characterized in that** the second diaphragm (53) closes off the interior (54) of the valve housing (13) with respect to the valve outlet (17).

8. Apparatus according to Claim 1, **characterized in that** the first diaphragm (43) is acted upon, on its first diaphragm side (47) facing the valve inlet (15), by the medium pressure there in a first axial direction, and the second diaphragm (53) is acted upon on its side (55) facing the valve outlet (17) by the medium pressure there in a second axial direction which is opposite to the first axial direction, and **in that** the valve member (24) is thereby pressure-compensated.

9. Apparatus according to one of Claims 1 to 8, **characterized in that** the armature (61) is guided axially movably in a contactless manner by means of at least one radially running spring (80, 90), in particular flat spring.

10. Apparatus according to Claim 9, **characterized in that** the armature (61) is held, centred, by means of a coaxial projection (63, 64) on the at least one spring (80, 90), in particular flat spring.

11. Apparatus according to Claim 9 or 10, **characterized in that** the at least one spring (80, 90), in particular flat spring, is held axially and centred radially by means of an outer marginal region (81, 91) between two housing elements (82, 83 or 92, 93), for example of the actuator (60) or of the valve housing (13).

12. Apparatus according to one of Claims 9 to 11, **characterized in that** radially projected projections (84), on the one hand, and assigned radially open recesses (85), on the other hand, are provided for the radial centring of the at least one spring (80), in particular flat spring.

13. Apparatus according to Claim 12, **characterized in that** the projections (84) are designed as approximately semicircular noses (86).

14. Apparatus according to Claim 12 or 13, **characterized in that** the radial recesses (85) are designed as indentations (87) which are assigned to the projections (84), in particular noses (86), and into which the projections (84), in particular noses (86), can engage, and **in that** the recesses (85) run out in at least one circumferential direction into oblique edges (88) which thereby serve for centring the at least one spring (80), in particular flat spring, as a result of the rotation of the latter, and **in that**, in this case, the projections (84) and the oblique edges (88) run on in relation to one another and, on account of the slope, generate a radially inward-directed actuating movement of the at least one spring (80), in particular flat spring.

15. Apparatus according to one of Claims 12 to 14, **characterized in that** the projections (84) and the recesses (85) are in each case arranged at approximately identical circumferential angular distances from one another.

16. Apparatus according to one of Claims 12 to 15, **characterized in that** three projections (84) are provided, for example, on a housing element (82) and three assigned recesses (85) are provided, for example on the spring (80), at circumferential angular distances of about 120° from one another.

17. Apparatus according to one of Claims 9 to 16, **characterized in that** the armature (61) has, at an end which faces away from the valve device (11), a spring (80), in particular flat spring, which is held and firmly tensioned axially on a first central axial projection (64) of the armature (61).

18. Apparatus according to one of Claims 9 to 17, **characterized in that** the armature (61) has, at the other end which faces the valve device (11), a further spring (90), in particular flat spring, which is held on a second central axial projection (63) of the armature (61).

19. Apparatus according to Claim 17 or 18, **characterized in that** the first and/or second axial projection (63, 64) has an annular step (65, 66), on which the spring (80, 90), in particular flat spring, is supported axially, preferably only in an axial direction which corresponds to the valve-opening actuation of the armature (61).

20. Apparatus according to Claim 18, **characterized in that** the second central axial projection (63) of the armature (61) butts axially with its free end (67) against the valve member (24) and, when the actuator (60) is activated, displaces the valve member (24) into the opening position and, with an increasing actuating force, enlarges the valve orifice (19) between the valve inlet (15) and the valve outlet (17).

21. Apparatus according to one of Claims 1 to 20, **characterized in that** the valve member (24) is held in a closing position with an adjustable closing force by means of a preferably coaxial closing spring (29), in such a way that a radial sealing face (25) of the valve member (24) is pressed axially against the valve seat (22).

22. Apparatus according to Claim 21, **characterized in that** the radial sealing face (25) has a, for example, disc-shaped sealing element (26) made, from example, from an elastomer.

23. Apparatus according to Claim 21 or 22, **characterized in that** the closing spring (29) acting on the valve member (24) in the closing direction is supported axially on an actuating element (30), for example a set screw, which is held adjustably in the valve housing (13).

24. Apparatus according to one of Claims 21 to 23, **characterized in that** the closing spring (29) is designed as a cylindrical helical spring.

25. Apparatus according to one of Claims 21 to 24, **characterized in that** the closing spring (29) and the actuating element (30) are arranged coaxially and on that side (27) of the valve member (24) which faces away from the valve seat (22).

26. Apparatus according to one of Claims 17 to 25, **characterized in that** the valve member (24) has a valve disc (28), through which passes the axial central connecting element (35) projecting beyond the valve disc (28) and reaching as far as the axial projection (63, 67) of the armature (61).

27. Apparatus according to Claim 26, **characterized in that** the connecting element (35) is approximately tubular.

28. Apparatus according to Claim 26 or 27, **characterized in that** the connecting element (35) has, at the end facing away from the axial projection (63, 67), the clamping element (36), for example in the form of a clamping ring, in particular is in one piece with this.

29. Apparatus according to one of Claims 26 to 28, **characterized in that** the compensating duct (37) of the connecting element (35) is axially open at one end (39) in the direction of the closing spring (29).

30. Apparatus according to one of Claims 1 to 29, **characterized in that** the actuator housing (62) and the valve housing (13) are combined into a one-piece housing (14).

## Revendications

1. Dispositif de régulation d'un milieu liquide ou gazeux, comprenant un dispositif de soupape (11) avec un boîtier de soupape (13), qui présente une entrée de soupape (15) et une sortie de soupape (17), qui sont en liaison l'une avec l'autre par le biais d'une ouverture de soupape (19) avec un siège de soupape (22), avec un organe de soupape (24) sollicité dans le sens de la fermeture, coopérant avec le siège de soupape (22) pour la régulation du débit du milieu à travers l'ouverture de soupape (19), et avec un actionneur électromagnétique (60), qui présente une armature (61) travaillant sur l'organe de soupape (24), qui est guidée de manière déplaçable axialement sans contact, l'organe de soupape (24) étant équilibré en pression par rapport à sa sollicitation avec la pression du milieu au niveau de l'entrée de soupape (15) et/ou au niveau de la sortie de soupape (17), et l'organe de soupape (24) étant centré au moyen d'une première membrane radiale (43) et étant guidé sans contact axialement, la membrane venant en prise centralement sur l'organe de soupape (24) et étant maintenue du côté du bord contre le boîtier de soupape (13), et étant sollicitée sur un premier côté de membrane (47) avec la pression du milieu au niveau de l'entrée de soupape (15),
**caractérisé en ce**
**qu'**une deuxième membrane radiale (53) est maintenue dans le boîtier de soupape (13) à distance axiale de la première membrane (43), laquelle est fixée au moyen d'un élément de connexion central (35) de l'organe de soupape (24) à ce dernier, et en ce que l'élément de connexion central (35) contient un canal d'équilibrage (37) qui est ouvert par une extrémité (38) vers l'espace de soupape (54) qui se trouve entre l'actionneur (60) et la deuxième membrane (53), et qui est purgé par l'autre l'extrémité (39) vers le deuxième côté de membrane (48) de la première membrane (43).

2. Dispositif selon la revendication 1,
**caractérisé en ce que**
la première membrane (43) ferme l'intérieur (46) du boîtier de soupape (13) par rapport à l'entrée de soupape (15).

3. Dispositif selon la revendication 1 ou 2,
**caractérisé en ce que**
la première membrane (43) vient en prise avec l'organe de soupape (24) du côté (27) de l'organe de soupape qui est opposé au siège de soupape (22), et est serrée fixement sur ce côté (27) au moyen d'un élément de serrage (36) de l'organe de soupape (24) contre celui-ci.

4. Dispositif selon l'une quelconque des revendications 1 à 3,
**caractérisé en ce que**
l'ouverture de soupape (19) est formée en tant que passage central (20) dans le boîtier de soupape (13), qui débouche, sur un côté axial (21) qui est opposé à l'actionneur (60), dans un siège annulaire coaxial (23), qui forme le siège de soupape (22).

5. Dispositif selon la revendication 4,
**caractérisé en ce que**
l'entrée de soupape (15) est disposée du côté (21) du passage central (20) qui contient le siège de soupape (22), et la sortie de soupape (17) est disposée à distance axiale de l'autre côté du passage central (20).

6. Dispositif selon l'une quelconque des revendications 1 à 5,
**caractérisé en ce que**
l'entrée de soupape (15) et la sortie de soupape (17) présentent à chaque fois au moins un canal radial (16, 18), par exemple un alésage, qui débouche radialement à l'intérieur dans l'ouverture de soupape (19).

7. Dispositif selon la revendication 1,
**caractérisé en ce que**
la deuxième membrane (53) ferme l'intérieur (54) du boîtier de soupape (13) par rapport à la sortie de soupape (17).

8. Dispositif selon la revendication 1,
**caractérisé en ce que**
la première membrane (43) est sollicitée dans une première direction axiale sur son premier côté de membrane (47) tourné vers l'entrée de soupape (15) avec la pression du milieu qui s'y trouve, et la deuxième membrane (53) est sollicitée dans une deuxième direction axiale qui est opposée à la première direction axiale sur son côté (55) tourné vers la sortie de soupape (17) avec la pression du milieu qui s'y trouve, et **en ce que** de ce fait l'organe de soupape (24) est équilibré en pression.

9. Dispositif selon l'une quelconque des revendications 1 à 8,
**caractérisé en ce que**
l'armature (61) est guidée de manière déplaçable axialement sans contact au moyen d'au moins un ressort s'étendant radialement (80, 90), en particulier un ressort plat.

10. Dispositif selon la revendication 9,
**caractérisé en ce que**
l'armature (61) est maintenue centrée avec une saillie coaxiale (63, 64) sur l'au moins un ressort (80, 90), en particulier un ressort plat.

11. Dispositif selon la revendication 9 ou 10,
**caractérisé en ce que**
l'au moins un ressort (80, 90), en particulier un ressort plat, est maintenu et centré radialement par une région de bord extérieure (81, 91) entre deux éléments de boîtier (82, 83, respectivement 92, 93), par exemple de l'actionneur (60) ou du boîtier de soupape (13).

12. Dispositif selon l'une quelconque des revendications 9 à 11,
**caractérisé en ce que**
pour le centrage radial de l'au moins un ressort (80), en particulier un ressort plat, on prévoit des saillies (84) orientées radialement d'une part, et des évidements associés (85), ouverts radialement, d'autre part.

13. Dispositif selon la revendication 12,
**caractérisé en ce que**
les saillies (84) sont réalisées sous forme de nez (86) approximativement de forme semi-circulaire.

14. Dispositif selon la revendication 12 ou 13,
**caractérisé en ce que**
les évidements radiaux (85) sont réalisés sous forme de renfoncements (87) associés aux saillies (84), notamment aux nez (86), dans lesquels les saillies (84), notamment les nez (86) peuvent venir en prise, et **en ce que** les évidements (85) se terminent dans au moins une direction périphérique dans des arêtes obliques (88) qui servent ainsi à centrer l'au moins un ressort (80), notamment un ressort plat, par rotation de ce dernier, **en ce que** dans ce cas les saillies (84) et les arêtes obliques (88) se rapprochent l'une par rapport à l'autre et du fait du biseau, produisent un mouvement de réglage orienté radialement vers l'intérieur de l'au moins un ressort (80), en particulier un ressort plat.

15. Dispositif selon l'une quelconque des revendications 12 à 14,
**caractérisé en ce que**
les saillies (84) et les évidements (85) sont à chaque fois disposés à des distances angulaires périphériques les uns des autres approximativement identiques.

16. Dispositif selon l'une quelconque des revendications 12 à 15,
**caractérisé en ce que**
trois saillies (84), par exemple sur un élément de boîtier (82), et trois évidements associés (85), par exemple sur le ressort (80), sont prévus à distances angulaires périphériques d'environ 120°.

17. Dispositif selon l'une quelconque des revendications 9 à 16,
**caractérisé en ce que**
l'armature (61) présente à une extrémité, qui est opposée au dispositif de soupape (11), un ressort (80), notamment un ressort plat, qui est maintenu sur une première saillie centrale axiale (64) de l'armature (61) et qui est serré fixement axialement.

18. Dispositif selon l'une quelconque des revendications 9 à 17,
**caractérisé en ce que**
l'armature (61) présente, à l'autre extrémité qui est tournée vers le dispositif de soupape (11), un autre ressort (90), en particulier un ressort plat, qui est maintenu sur une deuxième saillie centrale axiale (63) de l'armature (61).

19. Dispositif selon la revendication 17 ou 18,
**caractérisé en ce que**
la première et/ou la deuxième saillie axiale (63, 64) présentent un épaulement annulaire (65, 66), sur lequel le ressort (80, 90), en particulier un ressort plat, est supporté axialement, de préférence uniquement dans une direction axiale qui correspond à l'actionnement de l'ouverture de soupape de l'armature (61).

20. Dispositif selon la revendication 18,
**caractérisé en ce que**
la deuxième saillie centrale axiale (63) de l'armature (61) bute avec son extrémité libre (67) axialement contre l'organe de soupape (24) et lors de l'activation de l'actionneur (60), déplace l'organe de soupape (24) dans la position d'ouverture et avec une force d'actionnement croissante, augmente l'ouverture de soupape (19) entre l'entrée de soupape (15) et la sortie de soupape (17).

21. Dispositif selon l'une quelconque des revendications 1 à 20,
**caractérisé en ce que**
l'organe de soupape (24) est maintenu dans la position de fermeture au moyen d'un ressort de fermeture de préférence coaxial (29) avec une force de fermeture ajustable, de telle sorte qu'une surface d'étanchéité radiale (25) de l'organe de soupape (24) soit pressée axialement contre le siège de soupape (22).

22. Dispositif selon la revendication 21,
**caractérisé en ce que**
la surface d'étanchéité radiale (25) présente un élément d'étanchéité par exemple en forme de disque (26), par exemple en élastomère.

23. Dispositif selon la revendication 21 ou 22,
**caractérisé en ce que**
le ressort de fermeture (29) sollicitant l'organe de soupape (24) dans la direction de fermeture est supporté axialement contre un élément de réglage (30), par exemple une vis d'ajustement, qui est maintenu de manière réglable dans le boîtier de soupape (13).

24. Dispositif selon l'une quelconque des revendications 21 à 23,
**caractérisé en ce que**
le ressort de fermeture (29) est réalisé sous forme de ressort à boudin cylindrique.

25. Dispositif selon l'une quelconque des revendications 21 à 24,
**caractérisé en ce que**
le ressort de fermeture (29) et l'élément de réglage (30) sont disposés coaxialement et sur le côté (27) de l'organe de soupape (24) qui est opposé au siège de soupape (22).

26. Dispositif selon l'une quelconque des revendications 17 à 25,
**caractérisé en ce que**
l'organe de soupape (24) présente un plateau de soupape (28), qui est traversé par l'élément de connexion (35) central axial, dépassant au-delà du plateau de soupape (28) et s'étendant jusqu'à la saillie axiale (63, 67) de l'armature (61).

27. Dispositif selon la revendication 26,
**caractérisé en ce que**
l'élément de connexion (35) est approximativement tubulaire.

28. Dispositif selon la revendication 26 ou 27,
**caractérisé en ce que**
l'élément de connexion (35) présente sur l'extrémité opposée à la saillie axiale (63, 67), l'élément de serrage (36), par exemple en forme de bague de serrage, notamment est réalisé d'une seule pièce avec celle-ci.

29. Dispositif selon l'une quelconque des revendications 26 à 28,
**caractérisé en ce que**
le canal d'équilibrage (37) de l'élément de connexion (35) est ouvert axialement par une extrémité (39) dans la direction du ressort de fermeture (29).

30. Dispositif selon l'une quelconque des revendications 1 à 29,
**caractérisé en ce que**
le boîtier d'actionneur (62) et le boîtier de soupape (13) sont réunis pour former un boîtier d'une seule pièce (14).
